# EUROPEAN PATENT APPLICATION

(11) **EP 3 239 921 A1**
(43) Date of publication of application: **01.11.2017**
(21) Application number: 15873445.9
(22) Date of filing: 07.09.2015
(51) Int. Cl.: G06Q 50/30

(54) **ARRIVAL INFORMATION PROVIDING METHOD, SERVER AND DISPLAY DEVICE**

(30) Priority: 26.12.2014 KR 20140190542
(71) Applicant: Korea Airports Corporation, Seoul 07505 (KR)
(72) Inventor: KIM, Dong Soo, Gimpo-si Gyeonggi-do 10116 (KR)
(74) Representative: Fry, Emma Leland
(86) International application number: PCT/KR2015/009420
(87) International publication number: WO 2016/104917

(57) **Abstract**

The present invention relates to an arrival information providing method that is performed by an arrival information providing server. According to the present invention, an arrival information providing method is provided, wherein the method comprises the steps of: receiving aeroplane information from an aeroplane information management server with respect to an airport at which an aeroplane arrives, and determining an actual arrival time of an aeroplane that is a time at which the aeroplane arrives at a parking ramp; calculating a passenger travelling time that is a time taken for a passenger of the aeroplane to arrive at an arrival exit gate of the airport from the actual arrival time of the aeroplane, and determining an expected arrival time of the passenger based on the actual arrival time of the aeroplane and the travelling time of the passenger; and providing the actual arrival time of the aeroplane and the expected arrival time of the passenger to an arrival information providing display device. According to the present invention, convenience for airport users is provided and services can be enhanced.

## Description

### Technical Field

Example embodiments relate to an arrival information providing method and server, and a display device.

### Background Art

An airplane may arrive at a destination behind an expected arrival time because the airplane may be grounded or delayed due to adverse weather conditions or congested traffic around an airport. Thus, a person who waits for a passenger of the airplane to meet the passenger at an arrival exit gate of the airport may need to wait an arrival of the passenger even after the expected arrival time of the airplane.

After the arrival of the airplane, the person may need to wait for the passenger to arrive at the arrival exit gate for about 30 minutes or more than 2 hours. Thus, there may be a wide variation in waiting time. In addition, the person may not estimate an accurate time at which the passenger is to arrive at the arrival exit gate based on the arrival time of the airplane, and thus the person may experience inconvenience because the person needs to wait at the arrival exit gate until the passenger arrives at the arrival exit gate.

An airplane arrival announcing device may provide information about an airline, a flight number, an expected airplane arrival time on schedule, a point of departure, and an arrival time of the airplane at which the airplane lands, and information as to whether the airplane arrives at an airport, or is delayed or canceled.

However, a person who waits for a passenger of an airplane to meet the passenger may not obtain sufficient information only from the airplane arrival announcing device, and also not move to another place until the passenger appears at an arrival exit gate of an airport at which the airplane arrives. In addition, the person may waste time by waiting until the passenger appears at the arrival exit gate.

Furthermore, for example, in a case that a person who goes to an airport to pick up a guest for an important business task is out of an arrival exit gate of the airport for a short time for some personal errands and, meanwhile, the guest comes out the arrival exit gate, and thus the person and the guest miss each other and do not meet each other, the person may sustain a serious loss in business.

Thus, there is a desire for a service model that may provide arrival information of an airplane and a passenger of the airplane to an airport user or a person who goes to the airport to pick up and wait for the passenger at an airport at which the airplane is to arrive.

### Disclosure

### Technical Goals

According to example embodiments, solving issues described above may be enabled.

An aspect of the present disclosure provides a method of providing an airport user with an actual arrival time of a passenger of an airplane.

Another aspect of the present disclosure provides a method of providing a more accurate time at which a passenger of an airplane actually arrives at an arrival exit gate of an airport at which the airplane is to arrive.

### Technical Solutions

To achieve technical goals described above and realize effects described herein, the present disclosure provides following configurations.

According to an aspect of the present disclosure, there is provided an arrival information providing method to be performed by an arrival information providing server, the arrival information providing method including receiving airplane information from an airplane information managing server of an airport at which an airplane is to arrive and determining an actual airplane arrival time at which the airplane arrives at an apron of the airport, and calculating a passenger movement time from the actual airplane arrival time to a time at which a passenger of the airplane is to arrive at an arrival exit gate of the airport and determining an expected passenger arrival time based on the actual airplane arrival time and the passenger movement time.

The arrival information providing method may further include providing the actual airplane arrival time and the expected passenger arrival time to an arrival information providing display device.

The arrival information providing method may further include receiving airplane location information from the airplane information managing server, and providing an airplane location image including the airplane location information to the arrival information providing display device.

The airplane location information may include location information of the airplane located in the air near the airport.

The airplane location information may include realtime location information of the airplane located on a ground of the airport including a runway or a gate of the airport.

The determining of the expected passenger arrival time may include determining the expected passenger arrival time based on sensor information received from a sensor located on a passenger movement route from the apron of the airport at which the airplane is parked to the arrival exit gate of the airport.

The sensor information may include passenger image information obtained by an image capturer located on the passenger movement route.

The sensor information may include passenger identification information obtained by reading a passport, an identification card, a boarding pass, and an identification tag of the passenger.

The passenger movement route may include at least one of the apron, an entry gate, a quarantine station, an immigration checkpoint, a carousel, a customs inspection station, or an escalator.

The arrival information providing method may further include receiving passenger location information from the sensor located on the passenger movement route from the apron of the airport at which the airplane is parked to the arrival exit gate of the airport, and providing a passenger location image including the passenger location information to the arrival information providing display device.

The determining of the actual airplane arrival time may include determining the actual airplane arrival time at which the airplane is to arrive at the apron using a landing time at which the airplane lands on the runway of the airport and a period of time used to move from the runway to the apron.

The period of time used to move from the runway to the apron may be determined based on at least one of an apron allocation time for the airplane or an estimated airplane movement time used to move from the runway to the apron.

In response to the apron being connected to a boarding bridge, the determining of the expected passenger arrival time may include determining the expected passenger arrival time based on length information of the boarding bridge.

In response to the apron being a remote area, the determining of the expected passenger arrival time may include determining the expected passenger arrival time based on distance information associated with a distance from the remote area to an airport terminal.

The determining of the expected passenger arrival time may include determining the expected passenger arrival time from a current point in time based on a previously calculated expected arrival time used to move from the apron to the arrival exit gate.

According to another aspect of the present disclosure, there is provided an arrival information providing server including an airplane arrival time determiner configured to receive airplane information from an airplane information managing server of an airport at which an airplane is to arrive and determine an actual airplane arrival time at which the airplane is to arrive at an apron of the airport, and a passenger arrival time determiner configured to calculate a passenger movement time from the actual airplane arrival time to a time at which a passenger of the airplane arrives at an arrival exit gate of the airport and determine an expected passenger arrival time based on the actual airplane arrival time and the passenger movement time.

The arrival information providing server may further include an arrival time transmitter configured to transmit, to an arrival information providing display device, the actual airplane arrival time at which the airplane arrives at the apron and the expected passenger arrival time.

The arrival information providing server may further include an airplane location image transmitter configured to transmit, to the arrival information providing display device, an airplane location image including airplane location information received from the airplane information managing server.

The arrival information providing server may further include a passenger location image transmitter configured to transmit, to the arrival information providing display device, a passenger location image including passenger location information received from a sensor located on a passenger movement route from the apron at which the airplane is parked to the arrival exit gate of the airport.

According to still another aspect of the present disclosure, there is provided an arrival information providing display device including an arrival time receiver configured to receive, from an arrival information providing server, an expected passenger arrival time of a passenger aboard an airplane arriving at an airport, and a display configured to display the expected passenger arrival time. The expected passenger arrival time may be determined based on an actual airplane arrival time at which the airplane arrives at an apron of the airport and a passenger movement time used for the passenger to move from the apron to an arrival exit gate of the airport.

### Advantageous Effects

According to example embodiments, a time at which a passenger of an airplane arrives at an arrival exit gate may be provided. Thus, arrival information that is useful to an airport user may be provided.

According to example embodiments, a more accurate time at which a passenger of an airplane actually arrives at an arrival exit gate may be provided. Thus, convenience and improved services may be provided to an airport user and a person waiting for the passenger.

### Brief Description of Drawings

FIG. 1 is a flowchart illustrating an arrival information providing method according to an example embodiment.
FIG. 2 is a conceptual diagram illustrating an entire arrival information providing system according to an example embodiment.
FIG. 3 is a diagram illustrating an example of arrival information displayed on a display of an arrival information providing display device according to an example embodiment.
FIG. 4 is a diagram illustrating an example of a location image and arrival information displayed on a display of an arrival information providing display device according to an example embodiment.
FIG. 5 is a diagram illustrating an example of an airplane location image based on an apron of an airport according to an example embodiment.
FIG. 6 is a diagram illustrating an example of a passenger location image based on a movement route according to an example embodiment.
FIG. 7 is a diagram illustrating an entire arrival information providing system including an arrival information providing server according to an example embodiment.
FIG. 8 is a diagram illustrating an arrival information providing method performed in a user terminal according to an example embodiment.
FIG. 9 is a diagram illustrating an example of an airplane location image displayed on a display of a user terminal according to an example embodiment.
FIG. 10 is a diagram illustrating an example of a passenger location image displayed on a display of a user terminal according to an example embodiment.
FIG. 11 is a diagram illustrating an arrival information providing server according to an example embodiment.
FIG. 12 is a diagram illustrating an arrival information providing display device according to an example embodiment.

### Best Mode for Currying Out the Invention

Reference will now be made in detail to embodiments of the present disclosure, examples of which are illustrated in the accompanying drawings, wherein like reference numerals refer to the like elements throughout. The embodiments are described below in order to explain the present disclosure by referring to the figures.

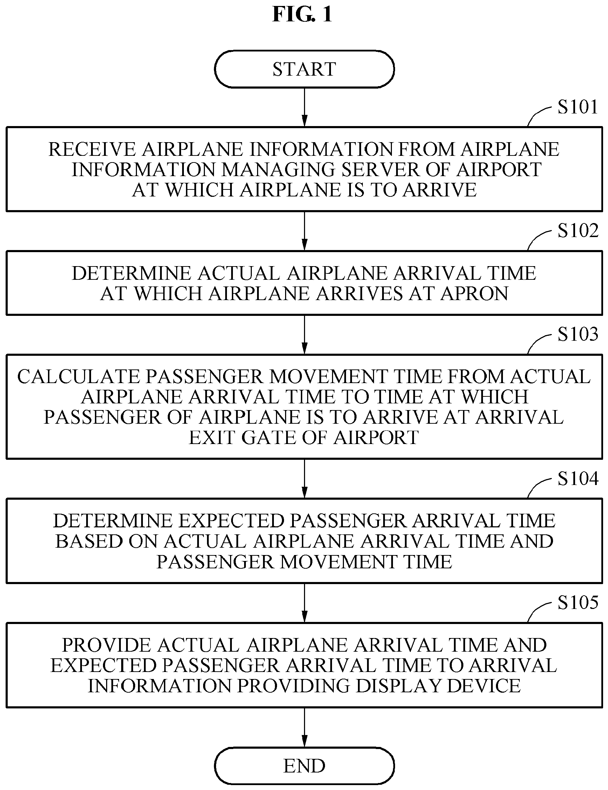

FIG. 1 is a flowchart illustrating an arrival information providing method according to an example embodiment.

The arrival information providing method to be performed by an arrival information providing server may be divided into the following operations.

In operation S101, the arrival information providing server receives airplane information from an airplane information managing server of an airport at which an airplane is to arrive.

The airplane information managing server may be at least one of a flight information server, an air control server, or a ground control server. The airplane information managing server may manage an airplane flight number, airplane location information, and estimated location information including airplane landing at an airport, and an apron of the airport apron at which the airplane is parked.

The flight information server may be connected to a database configured to collect airplane flight information, and used to manage daily flight information of each airplane. In addition, the flight information server may interwork with airport facilities to control airport equipment.

The air control server may be connected to an air traffic control radar to transmit and receive airplane information. The air control server may support a safe flight or navigation of an airplane both in the air and on the ground. In addition, the air control server may maintain desirable air traffic, and support an airfield control task, an access control task, and an airway control task based on a task range and a characteristic of each step of flight.

The ground control server may be connected to a ground traffic control radar to transmit and receive airplane information. In addition, the ground control server, which is an integrated ground control system configured to detect, guide, and control airplanes and various support vehicles moving on runways or taxiways using radars and light controllers installed at an airport, may support a safe flight or navigation of an airplane.

In operation S102, the arrival information providing server determines an actual airplane arrival time at which the airplane is to arrive at an apron of the airport.

Here, the actual airplane arrival time at which the airplane arrives at the apron may be determined using a landing time of the airplane at which the airplane lands on a runway of the airport and a time used for the airplane to move from the runway to the apron.

The time used for the airplane to move from the runway to the apron may be determined based on at least one of an apron allocation time for the airplane or an estimated airplane movement time used for the airplane to move from the runway to the apron.

In operation S103, the arrival information providing server calculates a passenger movement time from the actual airplane arrival time to a time at which a passenger of the airplane arrives at an arrival exit gate of the airport.

In operation S104, the arrival information providing server determines an expected passenger arrival time based on the actual airplane arrival time and the passenger movement time.

The expected passenger arrival time may be determined based on sensor information received from a sensor located on a passenger movement route from the apron at which the airplane is parked to the arrival exit gate of the airport.

The sensor information may include passenger image information obtained by capturing a passenger image using an image capturer located on the passenger movement route. The sensor information may also include passenger identification information obtained by reading a passport, an identification card, a boarding pass, and an identification tag of the passenger.

The passenger movement route may include at least one of the apron, an entry gate, a quarantine station, an immigration checkpoint, a carousel, a customs inspection station, or an escalator.

In a case that the apron at which the airplane is parked is connected to a boarding bridge, the expected passenger arrival time may be determined based on length information of the boarding bridge. In addition, in a case that the apron at which the airplane is parked is a remote area, the expected passenger arrival time may be determined based on distance information associated with a distance from the remote area to an airport terminal.

In addition, the expected passenger arrival time from a current point in time may be determined based on a previously calculated expected arrival time used for the passenger to move from the apron to the arrival exit gate. For example, in a case that the arrival information providing server receives failure occurrence information from a sensor at the airport, the expected passenger arrival time may be determined using a previously calculated average passenger movement time used for a passenger to move from an apron identical to the apron at which the airplane is parked to an arrival exit gate identical to the arrival exit gate of the airport.

In operation S105, the arrival information providing server provides the actual airplane arrival time and the expected passenger arrival time to an arrival information providing display device.

According to an example embodiment, guidance information or advertisement information may also be provided to the arrival information providing display device.

For example, based on a preset period and area, the arrival information providing display device may be supported to display an airplane location image, a passenger location image, and the guidance information or the advertisement information.

According to an example embodiment, the arrival information providing method to be performed by the arrival information providing server may further include the following operations.

First, the arrival information providing server receives airplane location information from the airplane information managing server.

Subsequently, the arrival information providing server provides the airplane location image including the airplane location information to the arrival information providing display device.

The airplane location information may include location information of the airplane located in the air near the airport. In addition, the airplane location information may include realtime location information of the airplane located on the ground of the airport including the runway or a gate of the airport.

According to an example embodiment, the arrival information providing method to be performed by the arrival information providing server may further include the following operations.

First, the arrival information providing server receives passenger location information from the sensor located on the passenger movement route from the apron at which the airplane is parked to the arrival exit gate of the airport.

Subsequently, the arrival information providing server provides the passenger location image including the passenger location information to the arrival information providing display device.

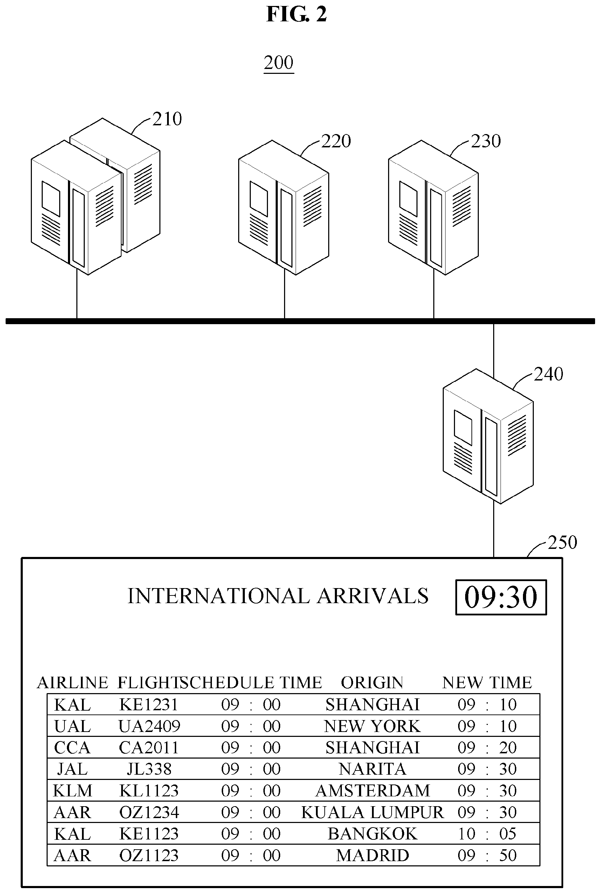

FIG. 2 is a conceptual diagram illustrating an entire arrival information providing system according to an example embodiment.

Referring to FIG. 2, an entire arrival information providing system includes a flight information server 210, an air control server 220, and a ground control server 230, which are an airplane information managing server, and an arrival information providing server 240 and an arrival information providing display device 250.

As necessary, the airplane information managing server may include one or a plurality of the flight information server 210, the air control server 220, and the ground control server 230. Also, the airplane information managing server may be a server configured to include airplane information and manage the information using a database. However, the airplane information managing server is not limited to the example server described in the foregoing.

The flight information server 210, the air control server 220, and the ground control server 230 may communicate with the arrival information providing server 240 through wired or wireless communication. The arrival information providing server 240 may receive airplane information from the flight information server 210, the air control server 220, and the ground control server 230.

The airplane information received from the flight information server 210 may include, for example, a daily schedule of each airplane, an expected arrival time on the schedule, a flight number, an airline, and a point of departure. In addition, the airplane information received from the air control server 220 and the ground control server 230 may include, for example, a current location, a velocity, a speed, and an altitude of an airplane. However, the airplane information is not limited to the examples described in the foregoing.

In addition, the arrival information providing server 240 and the arrival information providing display device 250 may communicate with each other, and the arrival information providing display device 250 may receive arrival information from the arrival information providing server 240. The arrival information providing display device 250 may receive, as the arrival information, an expected airplane arrival time and an expected passenger arrival time and display a changed time or a passenger appearing time, or a passenger out time. However, examples are not limited thereto.

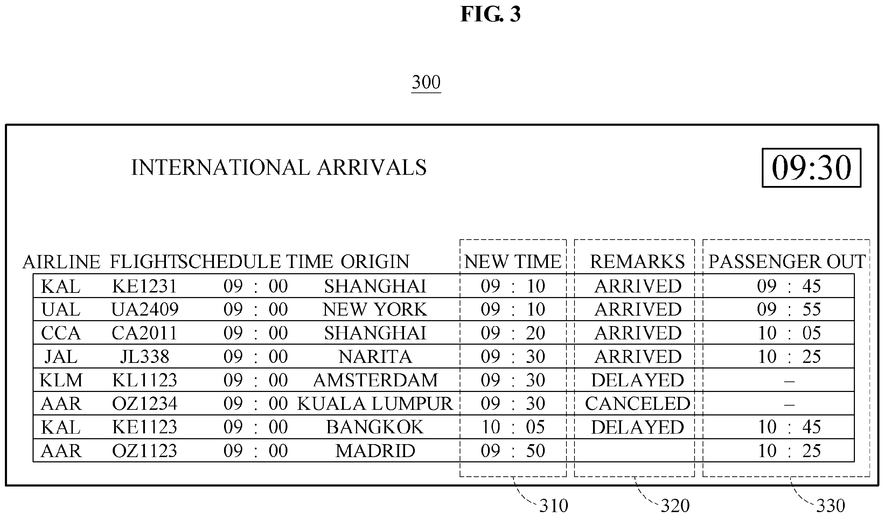

FIG. 3 is a diagram illustrating an example of arrival information displayed on a display of an arrival information providing display device according to an example embodiment.

An arrival information providing display device may be a display board indicating an expected airplane arrival time for each flight number. The arrival information providing display device may be installed inside or outside an airport, but not limited thereto.

Referring to FIG. 3, the arrival information providing display device may receive, in real time, information from an arrival information providing server and display the received information. A portion of the information displayed by the arrival information providing display device may be information received from another server.

The arrival information providing display device may receive, from the arrival information providing server, information about an actual airplane arrival time at which an airplane arrives at an apron of an airport, and display the information about the actual airplane arrival time as a changed time, or a new time 310.

The arrival information providing server may compare the expected airplane arrival time on schedule and the actual airplane arrival time and transmit, to the arrival information providing display device, information as to whether the airplane arrives or is delayed. The arrival information providing display device may display, in a remarks field 320 for each flight number, the information as to whether the airplane arrives or is delayed as information obtained through the comparing.

In addition, the arrival information providing display device may display, in a passenger out field 330, an expected time at which a passenger of the airplane actually comes out of an arrival exit gate of the airport, which is determined by the arrival information providing server. As necessary, the arrival information providing display device may display, in the passenger out field 330, a time at which a first passenger of the airplane actually comes out of the arrival exit gate.

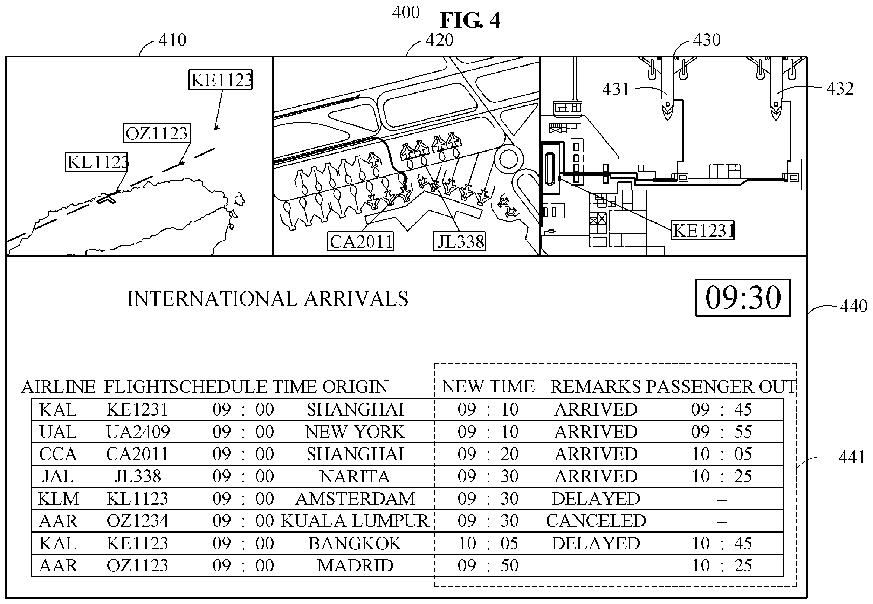

FIG. 4 is a diagram illustrating an example of a location image and arrival information displayed on a display of an arrival information providing display device according to an example embodiment.

According to an example embodiment, an arrival information providing display device may display divided information in each field. Here, a plurality of fields may be provided, but the number of the fields is not limited to a certain number. For example, the arrival information providing display device may simultaneously display an airplane location that is received from an air control server, an airplane location for each flight number that is received from a ground control server, and a passenger location based on sensor information of a sensor located on a passenger movement route from an apron of an airport at which an airplane is parked to an arrival exit gate of the airport. In addition, as necessary, the arrival information providing display device may simultaneously display an airplane location for each flight number, a passenger location for each flight number, an expected arrival time for each flight number, a changed time or a new time, and a passenger out time. Here, the new time may be an actual airplane arrival time at which an airplane arrives at an apron of an airport. The expected arrival time may be an arrival time for each flight number based on flight information of each airplane. In addition, the arrival information providing display device may also display, in separate fields for each flight number, a location of the airplane located in the air before landing, a location of the airplane located at the apron after landing, and a location of a passenger of the airplane after the airplane is parked.

As shown in 410, the arrival information providing display device may display, for each flight number, the airplane location that is obtained from an arrival information providing server after being received from the air control server, along with an illustration including a map including an airport or an area of the airport. Here, the displayed image may be an image received by the arrival information providing display device from the arrival information providing server. As necessary, the arrival information providing display device may store, in a memory, the illustration including the map including the airport or the area of the airport. In addition, the arrival information providing display device may receive, in real time from the arrival information providing server, the airplane location that is obtained from the arrival information providing server after being received from the air control server, and display the received airplane location for each flight number. Here, based on a distance between the received airplane location and the airport, the arrival information providing display device may display airplane sizes differently for each flight number. For example, as illustrated, the arrival information providing display device displays a flight KL1123 airplane, which is closest to the airport, to be of a relatively larger size. Conversely, the arrival information providing display device displays a flight KE1123 airplane, which is farthest from the airport, to be of a relatively smaller size. In addition, as shown in 440, the arrival information providing display device may change and display, in real time, an airplane location that matches a flight number corresponding to a passenger out time being displayed.

As shown in 420, the arrival information providing display device may display the airplane location for each flight number that is obtained from the arrival information providing server after being received from the ground control server, along with an image or an illustration of a runway at the airport on which the airplane lands or moves and an apron of the airport at which the airplane is parked. Here, the displayed image may be an image received by the arrival information providing display device from the arrival information providing server.

As shown in 430, the arrival information providing display device may display a passenger location based on sensor information received from a sensor located on a passenger movement route from an apron at which each of airplanes 431 and 432 is parked to an arrival exit gate of the airport.

For example, as illustrated, the arrival information providing display device displays a location of a passenger of the airplane 431 using a flight number KE1231 of the airplane 431. In addition, the arrival information providing display device displays a location of the passenger of the airplane 431 at a carousel using the flight number KE1231. As necessary, the arrival information providing display device may display locations of passengers of the airplanes 431 and 432 using a plurality of flight numbers. For example, the arrival information providing display device displays a location of a passenger of the airplane 432 using a flight number OZ1506 of the airplane 432. Here, the location of the passenger of the airplane 432 may be one point in at least one of the apron, an entry gate, a quarantine station, an immigration checkpoint, a carousel, a customs inspection station, or an escalator.

The arrival information providing display device may receive, in real time, an image including passenger location information from the arrival information providing server. In addition, the arrival information providing display device may display the passenger location information using an average speed based on a preset passenger movement route that is transmitted, in real time, from the arrival information providing server. As necessary, the arrival information providing display device may display a passenger location for each flight number based on a passenger location received, in real time, from the arrival information providing server. For example, in a case that a passenger location obtained, in real time, from the arrival information providing server, is closest to the arrival exit gate on the passenger movement route, the obtained passenger location may be displayed as the passenger location for each flight number. Also, in a case that a passenger location obtained, in real time, from the arrival information providing server, is farthest from the arrival exit gate on the passenger movement route, the obtained passenger location may be displayed as the passenger location for each flight number.

The arrival information providing display device may display time information associated with a time at which the passenger of the airplane arrives. In addition, as shown in 440, the arrival information providing display device may display a passenger out time determined based on the sensor information received from the sensor located on the passenger movement route from the apron to the arrival exit gate.

As shown in 441, the time information may change in real time, or be maintained the same for three to five seconds. The arrival information providing display device may display same information in real time for three to five seconds. However, examples are not limited thereto.

As necessary, the arrival information providing display device may display information that guides an airport user around the airport, and display an advertisement. In addition, the arrival information providing display device may receive such guidance information or advertisement information from the arrival information providing server, and display an airplane location image, a passenger location image, and the guidance information or the advertisement information based on a preset period and area.

For example, the arrival information providing display device may simultaneously display a first airplane location image illustrated in 410, a second airplane location image illustrated in 420, and a first passenger location image illustrated in 430, at regular time intervals.

In addition, the arrival information providing display device may display the guidance information or the advertisement information in place of one or two images of the first airplane location image illustrated in 410, the second airplane location image illustrated in 420, and the first passenger location image illustrated in 430. Here, the arrival information providing display device may sequentially change information displayed in each field and display the sequentially changing information in each field.

For example, the arrival information providing display device may display the advertisement information in place of the first airplane location image illustrated in 410 and the second airplane location image illustrated in 420. In addition, in a next time interval, the arrival information providing display device may display the advertisement information in place of the second airplane location image illustrated in 420 and the first passenger location image illustrated in 430.

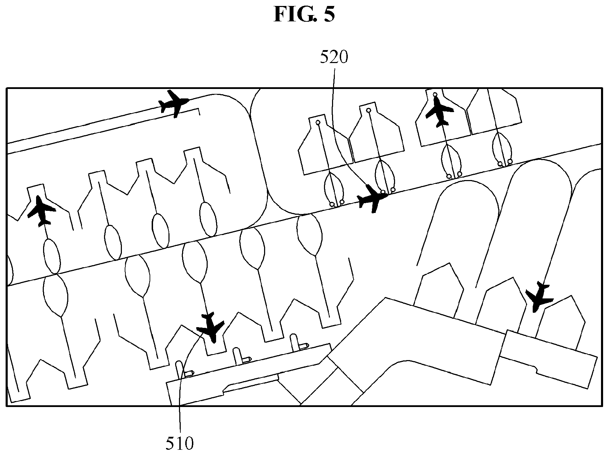

FIG. 5 is a diagram illustrating an example of an airplane location image based on an apron of an airport according to an example embodiment.

In a case of an airplane 510 being parked at an apron of an airport connected to a boarding bridge, an actual arrival time of the airplane 510 may be a time at which the airplane 510 arrives at the apron connected to the boarding bridge. Here, passenger location information may correspond to one point on a passenger movement route from the boarding bridge to an arrival exit gate of the airport.

An arrival information providing server may determine an expected passenger arrival time using length information of the boarding bridge.

In a case of an airplane 520 being parked at a remote apron of the airport, an actual arrival time of the airplane 520 may be a time at which the airplane 520 arrives at the remote apron. In such a case, since a passenger of the airplane 520 needs to move to an airport terminal by an airport shuttle bus, passenger location information may correspond to one point on a passenger movement route from the remote apron to the arrival exit gate of the airport.

Here, the arrival information providing server may determine an expected passenger arrival time using distance information associated with a distance from the remote apron to the airport terminal.

In addition, the arrival information providing server may determine the expected passenger arrival time based on a number of passengers of the airplane 520 and an average passenger number of each airport shuttle bus.

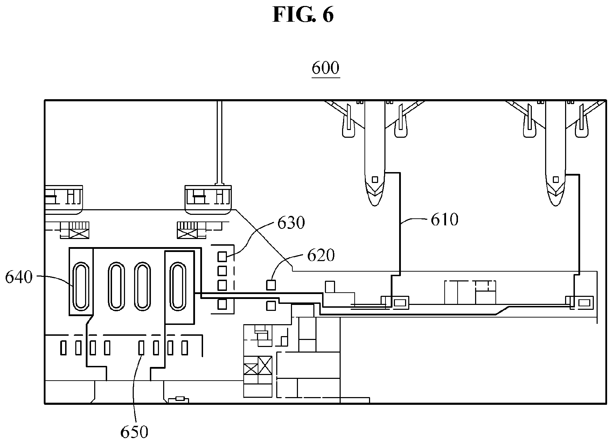

FIG. 6 is a diagram illustrating an example of a passenger location image based on a passenger movement route according to an example embodiment.

Referring to FIG. 6, a passenger movement route 610 includes at least one of an apron, an entry gate, a quarantine station 620, an immigration checkpoint 630, a carousel 640, a customs inspection station 650, or an escalator.

An arrival information providing server may determine a location of a passenger of an airplane based on sensor information received from a sensor located on a passenger movement route from an apron of an airport at which the airplane is parked to an arrival exit gate of the airport.

The sensor information may be identification information using a bar code or a radio frequency identification (RFID) that is read from a boarding pass of the passenger of the airplane or an additionally given identification tag. The sensor information may be information that is recognized, in a contact or noncontact method, from the boarding pass or the identification tag by a recognizer installed in each place on the passenger movement route. In addition, the sensor information including a time recognized from the boarding pass or the identification tag by such an additional recognizer in contact or noncontact method may be transferred, in real time, to the arrival information providing server. The time transferred to the arrival information providing server may be used for the arrival information providing server to calculate an accurate passenger out time.

In addition, referring to FIG. 6, a movement line is formed in order of the entry gate, the quarantine station 620, the immigration checkpoint 630, the carousel 640, and the customs inspection station 650 based on a location of the apron.

The arrival information providing server may calculate an average passenger movement time using passenger image information obtained by capturing an image using an image capturer on a passenger movement route from the quarantine station 620 to the immigration checkpoint 630 and image-capturing time information associated with a time at which the image is captured.

For example, for a period of time from a time at which a first airplane among 20 airplanes arrives at an apron of an airport to a time at which a last airplane among the 20 airplanes arrives at the apron, information obtained by capturing images using an image capturer at the quarantine station 620 and an image capturer at the immigration checkpoint 630 may be used. In addition, in a case that image capturers capture approximately 40,000 passengers, the arrival information providing server may calculate an average movement time of the passengers using image information of each of the passengers and image-capturing time information of each of the passengers. For example, when the average movement time used for the passengers to move from the quarantine station 620 to the immigration checkpoint 630 is 43 seconds, the arrival information providing server may determine, to be 43 seconds, a passenger movement time to be used for the passengers to move along the passenger movement route from the quarantine station 620 to the immigration checkpoint 630 of a passenger location image.

In addition, the arrival information providing server may provide the arrival information providing display device with a passenger location on the passenger movement route based on the calculated average movement time of the passengers. Further, the arrival information providing server may generate, as an image, the passenger location on the passenger movement route and provide the generated image to the arrival information providing display device.

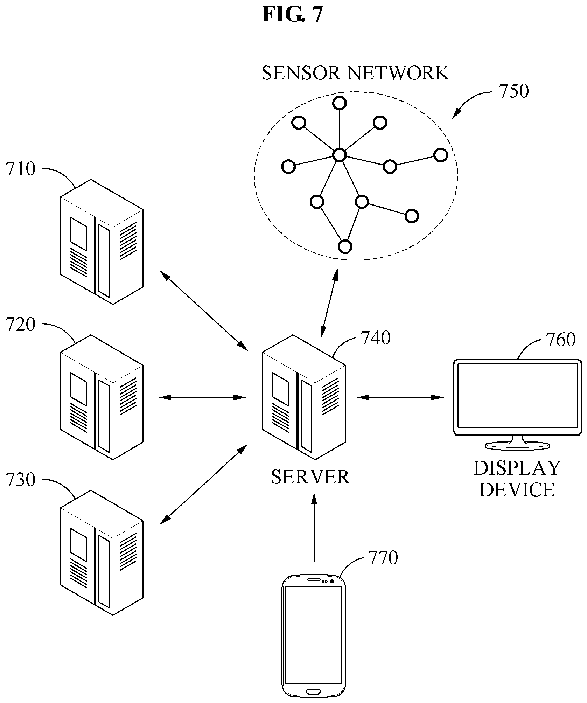

FIG. 7 is a diagram illustrating an entire arrival information providing system including an arrival information providing server according to an example embodiment.

Referring to FIG. 7, an entire arrival information providing system includes a flight information server 710, an air control server 720, a ground control server 730, an arrival information providing server 740, a sensor network 750, a display device 760, and a user terminal 770.

The arrival information providing server 740 may obtain information associated with a flight schedule from the flight information server 710. For example, the arrival information providing server 740 may obtain apron information associated with an apron of an airport at which an airplane is to be parked. In addition, the arrival information providing server 740 may receive airplane information from the air control server 720 and the ground control server 730 through control radars. For example, the arrival information providing server 740 may obtain information about a speed of the airplane and a location of the airplane.

In addition, the arrival information providing server 740 may obtain sensor information from the sensor network 750 provided on a passenger movement route from the apron to an arrival exit gate of the airport. For example, the arrival information providing server 740 may receive passenger identification information obtained by reading a boarding pass of a passenger of the airplane.

Further, the arrival information providing server 740 may provide the display device 760 or the user terminal 770 with an airplane location image generated using the information obtained from the flight information server 710, the air control server 720, and the ground control server 730. In addition, the arrival information providing server 740 may provide the display device 760 or the user terminal 770 with a passenger location image generated using the information obtained from the sensor network 750.

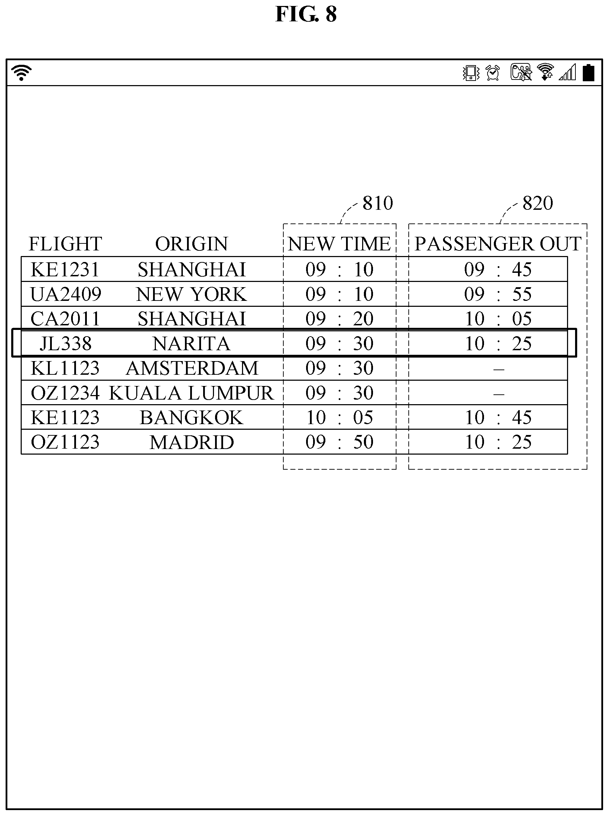

FIG. 8 is a diagram illustrating an arrival information providing method performed in a user terminal according to an example embodiment.

Referring to FIG. 8, the arrival information providing server 740 may provide the user terminal 770 with information about a flight number, a point of departure, an arrival time 810, and a passenger out time 820. The arrival time 810 refers to a time at which an airplane is parked at an apron of an airport. The passenger out time 820 refers to a passenger arrival time from a current point in time that is determined based on a previously calculated expected arrival time.

The arrival information providing server 740 may provide the user terminal 770 with an airplane location image and a passenger location image for each flight number. For example, as illustrated, in a case that a user touches airplane information associated with a flight JL338 airplane, which departs from Narita, on a display, a location image of the flight JL338 airplane that matches a flight number JL338 is provided on the display. For example, an image of the flight JL338 airplane matching the flight number JL338 being located in the air near the airport before landing, an image of the flight JL338 airplane being parked at the apron of the airport after landing, and a passenger location image corresponding to the flight JL338 airplane may be displayed in real time based on a time at which the information is touched.

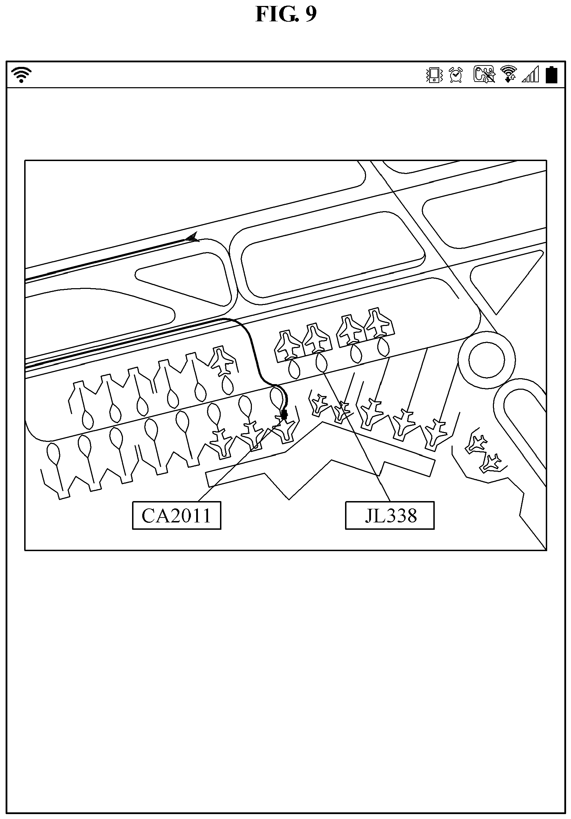

FIG. 9 is a diagram illustrating an example of an airplane location image displayed on a display of a user terminal according to an example embodiment.

Referring to FIG. 9, the arrival information providing server 740 may provide the user terminal 770 with an airplane location image and a passenger location image for each flight number. For example, as illustrated, a location image of a flight JL338 airplane, which departs from Narita, is provided on a display. Here, a location of an apron at which the flight JL338 airplane is parked may be provided as an image. In addition, a location image of another airplane may be simultaneously provided on the display. For example, a location image of a flight CA2011 airplane may be provided on the display.

In addition, in a case that a user touches an image of the flight JL338 airplane departing from Narita on the display, a passenger location image corresponding to the flight JL338 airplane may be provided on the display.

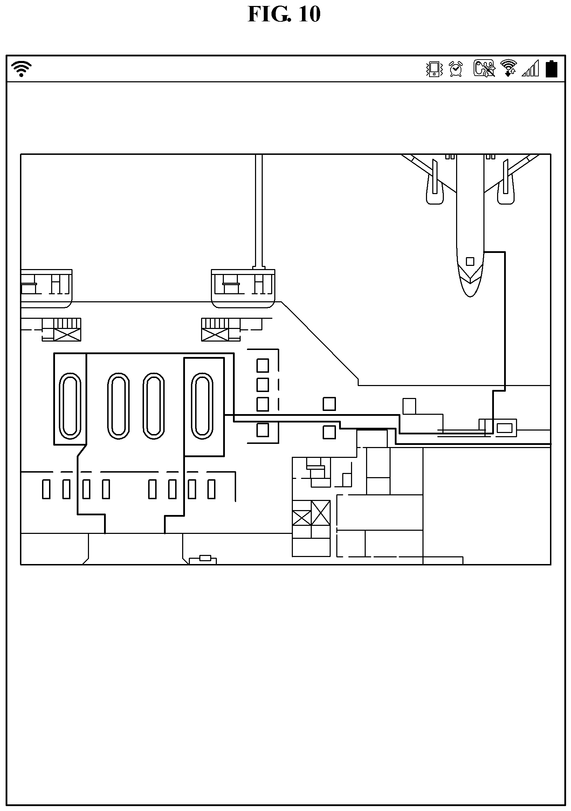

FIG. 10 is a diagram illustrating an example of a passenger location image displayed on a display of a user terminal according to an example embodiment.

Referring to FIG. 10, the arrival information providing server 740 may provide the user terminal 770 with a passenger location image for each flight number.

The passenger location image may be provided using a previously calculated time used for a passenger of an airplane to move along a route from an apron of an airport at which the airplane arrives to an arrival exit gate of the airport. As necessary, the passenger location image may be provided using a time calculated in real time corresponding to the route from the apron to the arrival exit gate. For example, the arrival information providing server 740 may obtain a first sensing time at which a passenger of a flight A or a passport of the passenger of the flight A is sensed by a first sensor, and a second sensing time at which the passenger of the flight A or the passport of the passenger of the flight A is sensed by a second sensor. Here, the arrival information providing server 740 may calculate, in real time, a movement speed of the passenger in a section from the first sensor to the section sensor using a distance between the first sensor and the second sensor on a preset route and a difference between the first sensing time and the second sensing time. As necessary, the arrival information providing server 740 may calculate movement speeds of passengers and calculate, in real time, an average movement speed of the passengers. In addition, the arrival information providing server 740 may determine a location of the passenger based on the average movement speed, and provide the determined location of the passenger as an image.

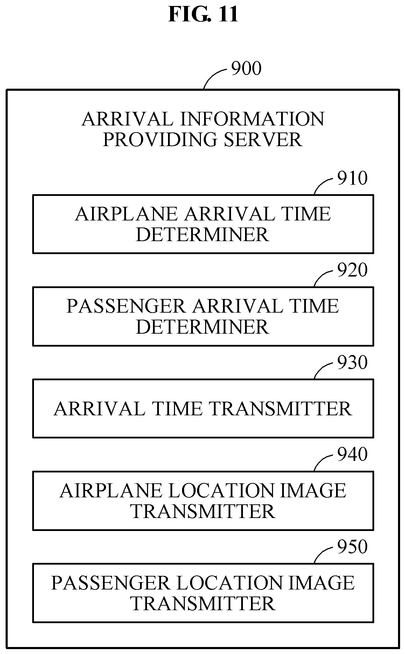

FIG. 11 is a diagram illustrating an arrival information providing server according to an example embodiment.

Referring to FIG. 11, an arrival information providing server 900 includes an airplane arrival time determiner 910, a passenger arrival time determiner 920, and arrival time transmitter 930, an airplane location image transmitter 940, and a passenger location image transmitter 950. The airplane arrival time determiner 910, the passenger arrival time determiner 920, the arrival time transmitter 930, the airplane location image transmitter 940, and the passenger location image transmitter 950 may include at least one of a processor, a memory, or a data transceiver, but not limited thereto.

As necessary, the arrival information providing server 900 may include the airplane arrival time determiner 910, the passenger arrival time determiner 920, and the arrival time transmitter 930. In addition, as necessary, the arrival information providing server 900 may include a database, or be connected to the database.

The airplane arrival time determiner 910 may receive airplane information from an airplane information managing server of an airport at which an airplane is to arrive, and determine an actual airplane arrival time at which the airplane arrives at an apron of the airport. The airplane information managing server may be at least one of a flight information server, an air control server, or a ground control server. The airplane information managing server may manage, for example, an airplane flight number, airplane location information, and information about an expected location of an airplane at which the airplane is to land and to be parked.

The flight information server may be connected to the database configured to collect airplane flight information, and used to manage daily flight information of each airplane. In addition, the flight information server may interwork with airport facilities to control airport equipment.

The air control server may be connected to an air traffic control radar to transmit and receive the airplane information. The air control server may support a safe flight or navigation of an airplane both in the air and on the ground. In addition, the air control server may maintain desirable air traffic, and support an airfield control task, an access control task, and an airway control task based on a task range and a characteristic for each flight step.

The ground control server may be connected to a ground traffic control radar to transmit and receive the airplane information. The ground control server may be an integrated ground control system configured to detect, guide, and control airplanes and various support vehicles that move on a runway and a taxiway of an airport using radars and light controllers that are installed at the airport, and may support a safe flight and navigation of the airplanes.

The airplane information may include a location-based sensing time for each flight number that is received from sensors and radars at the airport managed by the airplane information managing server. As necessary, the airplane information may include a flight number, a current speed, an altitude, a schedule, and cycle information of the airplane, and an apron allocation time for the airplane, which is obtained by or stored in the airplane information managing server. The airplane arrival time determiner 910 may determine the actual airplane arrival time at which the airplane arrives at the apron of the airport using a landing time at which the airplane lands on a runway of the airport and a time used for the airplane to move from the runway to the apron.

The time used for the airplane to move from the runway to the apron may be determined based on at least one of an apron allocation time for the airplane or an estimated airplane movement time used for the airplane to move from the runway to the apron.

The passenger arrival time determiner 920 may calculate a passenger movement time from the actual airplane arrival time to a time at which a passenger of the airplane arrives at an arrival exit gate of the airport. In addition, the passenger arrival time determiner 920 may determine an expected passenger arrival time based on the actual airplane arrival time and the passenger movement time.

The passenger arrival time determiner 920 may determine the expected passenger arrival time based on sensor information received from a sensor located on a passenger movement route from the apron at which the airplane is parked to the arrival exit gate of the airport.

The sensor information may include passenger image information that is obtained by capturing an image using an image capturer located on the passenger movement route. In addition, the sensor information may include passenger identification information obtained by reading a passport, an identification card, a boarding pass, and an identification tag of the passenger.

The passenger movement route may include at least one of the apron, an entry gate, a quarantine station, an immigration checkpoint, a carousel, a customs inspection station, or an escalator.

In a case that the apron at which the airplane is parked is connected to a boarding bridge, the passenger arrival time determiner 920 may determine the expected passenger arrival time based on length information of the boarding bridge. In addition, in a case that the apron at which the airplane is parked is a remote area, the passenger arrival time determiner 920 may determine the expected passenger arrival time based on distance information associated with a distance from the remote area to an airport terminal.

In addition, the passenger arrival time determiner 920 may determine the expected passenger arrival time from a current point in time based on a previously calculated expected passenger arrival time used for the passenger to move from the apron to the arrival exit gate. In a case that failure occurrence information is received from a sensor at the airport, the passenger arrival time determiner 920 may determine the expected passenger arrival time using a previously calculated average passenger movement time used for passengers to move from an apron identical to the apron at which the airplane is parked to an arrival exit gate identical to the arrival exit gate of the airport.

The arrival time transmitter 930 may transmit, to an arrival information providing display device, the actual airplane arrival time at which the airplane arrives at the apron and the expected passenger arrival time.

The airplane location image transmitter 940 may transmit, to the arrival information providing display device, an airplane location image including airplane location information received from the airplane information managing server.

The passenger location image transmitter 950 may provide a passenger location image including passenger location information to the arrival information providing display device. The passenger location information may be information received from the sensor located on the passenger movement route from the apron at which the airplane is parked to the arrival exit gate of the airport.

The arrival information providing server 900 may provide guidance information or advertisement information to the arrival information providing display device.

For example, the arrival information providing server 900 may support the arrival information providing device to display the airplane location image, the passenger location image, and the guidance information or the advertisement information, based on a preset period and area.

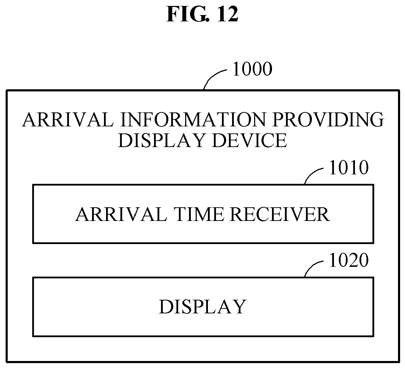

FIG. 12 is a diagram illustrating an arrival information providing display device according to an example embodiment.

Referring to FIG. 12, an arrival information providing display device 1000 includes an arrival time receiver 1010 and a display 1020. As necessary, the arrival information providing display device 1000 may include a user inputter (not shown), or a data transmitter (not shown) configured to transmit information to an arrival information providing server.

The arrival information providing display device 1000 may include at least one of a processor, a memory, or a data transceiver. The arrival information providing display device 1000 may be a computing device, which is a user terminal, but not limited thereto.

The arrival time receiver 1010 may receive, from the arrival information providing server, an expected passenger arrival time of a passenger aboard an airplane that arrives at an airport.

The display 1020 may display the expected passenger arrival time. The expected passenger arrival time may be determined based on an actual airplane arrival time at which the airplane arrives at an apron of the airport and a passenger movement time used for the passenger to move from the apron to an arrival exit gate of the airport.

According to example embodiments, an arrival information providing method described herein may provide a passenger arrival time and an airplane arrival time and inform airport users of when a passenger of an airplane appears at an arrival exit gate of an airport, thereby providing convenience to the airport users. In addition, the arrival information providing method may calculate an accurate arrival time of the passenger based on a type of an apron of the airport at which the airplane arrives, and thus provide the accurate arrival time of the passenger.

Further, the arrival information providing method may provide a visual guidance to a location of the airplane and a location of the passenger, and thus improve understandings of the airport users through such a stereoscopic guidance. Furthermore, the arrival information providing method may add an airport use guidance and an advertising display to a display that displays a location image of the airplane, and thus add a guidance function and generate advertising revenues.

The units described herein may be implemented using hardware components and software components. For example, the hardware components may include microphones, amplifiers, band-pass filters, audio to digital convertors, non-transitory computer memory and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An arrival information providing method to be performed by an arrival information providing server, the arrival information providing method comprising:
receiving airplane information from an airplane information managing server of an airport at which an airplane is to arrive, and determining an actual airplane arrival time at which the airplane arrives at an apron of the airport; and
calculating a passenger movement time from the actual airplane arrival time to a time at which a passenger of the airplane is to arrive at an arrival exit gate of the airport, and determining an expected passenger arrival time based on the actual airplane arrival time and the passenger movement time.

2. The arrival information providing method of claim 1, further comprising:
providing the actual airplane arrival time and the expected passenger arrival time to an arrival information providing display device.

3. The arrival information providing method of claim 1, further comprising:
receiving airplane location information from the airplane information managing server; and
providing an airplane location image including the airplane location information to an arrival information providing display device.

4. The arrival information providing method of claim 3, wherein the airplane location information includes location information of the airplane located in the air near the airport.

5. The arrival information providing method of claim 3, wherein the airplane location information includes realtime location information of the airplane located on a ground of the airport including a runway or a gate of the airport.

6. The arrival information providing method of claim 1, wherein the determining of the expected passenger arrival time comprises:
determining the expected passenger arrival time based on sensor information received from a sensor located on a passenger movement route from the apron of the airport at which the airplane is parked to the arrival exit gate of the airport.

7. The arrival information providing method of claim 6, wherein the sensor information includes passenger image information obtained by an image capturer located on the passenger movement route.

8. The arrival information providing method of claim 6, wherein the sensor information includes passenger identification information obtained by reading a passport, an identification card, a boarding pass, and an identification tag of the passenger.

9. The arrival information providing method of claim 6, wherein the passenger movement route includes at least one of the apron, an entry gate, a quarantine station, an immigration checkpoint, a carousel, a customs inspection station, or an escalator.

10. The arrival information providing method of claim 1, further comprising:
receiving passenger location information from a sensor located on a passenger movement route from the apron of the airport at which the airplane is parked to the arrival exit gate of the airport; and
providing a passenger location image including the passenger location information to an arrival information providing display device.

11. The arrival information providing method of claim 1, wherein the determining of the actual airplane arrival time comprises:
determining the actual airplane arrival time at which the airplane is to arrive at the apron using a landing time at which the airplane lands on a runway of the airport and a period of time used for the airplane to move from the runway to the apron.

12. The arrival information providing method of claim 11, wherein the period of time used for the airplane to move from the runway to the apron is determined based on at least one of an apron allocation time for the airplane or an estimated airplane movement time used for the airplane to move from the runway to the apron.

13. The arrival information providing method of claim 1, wherein, in response to the apron being connected to a boarding bridge, the determining of the expected passenger arrival time comprises:
determining the expected passenger arrival time based on length information of the boarding bridge.

14. The arrival information providing method of claim 1, wherein, in response to the apron being a remote area, the determining of the expected passenger arrival time comprises:
determining the expected passenger arrival time based on distance information associated with a distance from the remote area to an airport terminal.

15. The arrival information providing method of claim 1, wherein the determining of the expected passenger arrival time comprises:
determining the expected passenger arrival time from a current point in time based on a previously calculated expected arrival time used to move from the apron to the arrival exit gate.

16. The arrival information providing method of claims 3 and 10, further comprising:
providing guidance information or advertisement information to the arrival information providing display device,
wherein the providing of the guidance information or the advertisement information comprises supporting the arrival information providing display device to display the airplane location image, the passenger location image, and the guidance information or the advertisement information based on a preset period and area.

17. An arrival information providing server, comprising:
an airplane arrival time determiner configured to receive airplane information from an airplane information managing server of an airport at which an airplane is to arrive, and determine an actual airplane arrival time at which the airplane is to arrive at an apron of the airport; and
a passenger arrival time determiner configured to calculate a passenger movement time from the actual airplane arrival time to a time at which a passenger of the airplane arrives at an arrival exit gate of the airport, and determine an expected passenger arrival time based on the actual airplane arrival time and the passenger movement time.

18. The arrival information providing server of claim 17, further comprising:
an arrival time transmitter configured to transmit, to an arrival information providing display device, the actual airplane arrival time at which the airplane arrives at the apron and the expected passenger arrival time.

19. The arrival information providing server of claim 17, further comprising:
an airplane location image transmitter configured to transmit, to an arrival information providing display device, an airplane location image including airplane location information received from the airplane information managing server.

20. The arrival information providing server of claim 17, further comprising:
a passenger location image transmitter configured to transmit, to an arrival information providing display device, a passenger location image including passenger location information received from a sensor located on a passenger movement route from the apron at which the airplane is parked to the arrival exit gate of the airport.

21. An arrival information providing display device, comprising:
an arrival time receiver configured to receive, from an arrival information providing server, an expected passenger arrival time of a passenger aboard an airplane arriving at an airport; and
a display configured to display the expected passenger arrival time,
wherein the expected passenger arrival time is determined based on an actual airplane arrival time at which the airplane arrives at an apron of the airport and a passenger movement time used for the passenger to move from the apron to an arrival exit gate of the airport.
